# EUROPÄISCHE PATENTSCHRIFT

(11) **EP 2 069 736 B1**
(45) Veröffentlichungstag und Bekanntmachung des Hinweises auf die Patenterteilung: **26.10.2011**
(21) Anmeldenummer: 07803146.5
(22) Anmeldetag: 03.09.2007
(51) Int. Cl.: G01K 1/02

(54) **VERFAHREN ZUM PASSIVEN BESTIMMEN DER BETRIEBSTEMPERATUR IN EINER THERMISCH STARK BELASTETEN EINRICHTUNG SOWIE VORRICHTUNG ZUR DURCHFÜHRUNG DES VERFAHRENS**
METHOD FOR PASSIVELY DETERMINING THE OPERATING TEMPERATURE IN A DEVICE SUBJECTED TO GREAT THERMAL STRESS, AND APPARATUS FOR CARRYING OUT SAID METHOD
PROCÉDÉ DE DÉTERMINATION PASSIVE DE LA TEMPÉRATURE DE FONCTIONNEMENT DANS UN SYSTÈME SOUMIS À UNE FORTE CONTRAINTE THERMIQUE, ET DISPOSITIF POUR METTRE EN OEUVRE LE PROCÉDÉ

(30) Priorität: 02.10.2006 CH 15652006
(43) Veröffentlichungstag der Anmeldung: 17.06.2009
(73) Patentinhaber: Alstom Technology Ltd, 5400 Baden (CH)
(72) Erfinder: MOSER, Roland Dr., CH-8005 Zürich (CH); GERMERDONK, Klaus Dr., CH-5408 Ennetbaden (CH); RABENSTEINER, Bernd, CH-5415 Rieden (CH); LANG, Peter, CH-5085 Sulz (CH)
(86) Internationale Anmeldenummer: PCT/EP2007/059159
(87) Internationale Veröffentlichungsnummer: WO 2008/040603

(56) Entgegenhaltungen:
- WO-A-2006/007056
- JP-A- 1 143 748
- JP-A- 2001 305 084
- US-A1- 2006 056 959
- US-A1- 2006 207 263

## Beschreibung

### TECHNISCHES GEBIET

Die vorliegende Erfindung bezieht sich auf das Gebiet der Temperaturmesstechnik. Sie betrifft ein Verfahren zum passiven Bestimmen der Betriebstemperatur in einer thermisch stark belasteten Einrichtung sowie eine Vorrichtung zur Durchführung des Verfahrens.

### STAND DER TECHNIK

Auf dem Gebiet der thermischen Maschinen (z.B. Gasturbinen) und Kessel ist es von grösster Wichtigkeit, die tatsächlichen Betriebstemperaturen (typischerweise 700 - 1000 °C) an verschiedenen Teilen der Vorrichtung zu kennen. Es ist jedoch häufig nicht möglich, bei einer bereits in Betrieb befindlichen Vorrichtung nachträglich noch aktive (verdrahtete) Sensoren anzubringen, so dass passive Sensoren, welche die Temperatur durch eine (dauerhafte) Änderung in ihren physikalischen Eigenschaften anzeigen, in solchen Fällen das Mittel der Wahl sind.

Bekannt ist die Thermofarbe ("thermal paint"), ein Lack, der in Abhängigkeit von der Temperatur dauerhaft seine Farbe ändert. Unter den verschiedenen Nachteilen dieser Lösung ist insbesondere die Notwendigkeit hervorzuheben, dass die Vorrichtung auseinandergebaut werden muss, bevor die zu untersuchenden Teile gestrichen werden können, die relative Ungenauigkeit der Temperaturbestimmung und die Notwendigkeit eines eng überwachten "Extralaufs" der Vorrichtung, der dazu führt, dass die Messung nicht die normalen Betriebsbedingungen widerspiegelt. Ein Hauptnachteil ist jedoch, dass die zur Farbänderung führende chemische Reaktion nicht reversibel ist: Es kann daher nur die während des gesamten Betriebs jemals erreichte höchste Temperatur gemessen werden.

Weiterhin bekannt ist die metallographische Temperaturbestimmung, die jedoch nicht zerstörungsfrei ist und daher für die genannten Anwendungen nicht in Betracht kommt.

Neben der Thermofarben-Technik gibt es zahlreiche andere Versuche, den zu untersuchenden Teil der Vorrichtung mit einer Dickfilmbeschichtung zu versehen, die Thermogedächtniseigenschaften hat, d.h., die sich mit einer stabilen Änderung der molekularen Struktur an den Hochtemperaturbetrieb erinnert, dem sie zuletzt ausgesetzt gewesen ist.

Ein solcher idealerweise reversibler Prozess (reversibel im Sinne das der Prozess der Betriebstemperatur folgt und nicht bloss die höchste je gemessene Temperatur registriert) führt zu einer messbaren Änderung physikalischer Eigenschaften (Grössen, Parameter), die elektrisch sein können (spezifischer Widerstand), oder magnetisch (Permeabilität, Magnetisierung, magnetische Sättigung), oder mechanisch (Härte, Elastizitätsmodul, Querdehnzahl, Fliessgrenze, Dehnung, Dichte), oder akustisch (Kompressionswellengeschwindigkeit, Scherwellengeschwindigkeit, Stabgeschwindigkeit), oder thermisch (thermische Leitfähigkeit und Ausdehnung), oder optisch (Farbänderung).

Nach der Abkühlung der Beschichtung versucht man, den letzten Hochtemperaturbetrieb dadurch zu bestimmen, dass man die untersuchten Teile verschiedenen Wärmebehandlungen unterwirft, und die gesuchte Temperatur durch Anwendung empirischer Interpolationsvorschriften zu finden.

### DARSTELLUNG DER ERFINDUNG

Es ist Aufgabe der Erfindung, ein Verfahren zur Bestimmung der Betriebstemperatur in einer thermisch stark belasteten Vorrichtung anzugeben, welches die Nachteile bekannter Verfahren vermeidet und sich durch eine vereinfachte Durchführung, gute Genauigkeit und eine flexible Anwendung auszeichnet.

Die Aufgabe wird durch die Gesamtheit der Merkmale des Anspruchs 1 gelöst. Die erfindungsgemässe Lösung schlägt vor, einen Satz von Thermogedächtnis-Elementen den zu bestimmenden hohen Temperaturen aufzusetzen, wobei jedes Element des Satzes vorher einer Wärmebehandlung bei einer wohldefinierten, von Element zu Element verschiedenen Temperatur unterzogen worden ist. Das Element, dessen Wärmebehandlungstemperatur am nächsten an der Betriebstemperatur liegt, zeigt die geringsten Änderungen seiner physikalischen Eigenschaften. Die Auflösung ist dabei eine Funktion der Genauigkeit, mit der vorher die Wärmebehandlung auf die Elemente angewandt worden ist.

Eine Ausgestaltung des erfindungsgemässen Verfahrens zeichnet sich dadurch aus, dass im Rahmen des Vergleichs der Werte aus der ersten und zweiten Messung die gemessenen Werte des physikalischen Parameters paarweise voneinander subtrahiert werden. Es können aber auch andere mathematische Ansätze zum Vergleich der beiden Messungen eingesetzt werden. Eine andere Ausgestaltung der Erfindung ist **dadurch gekennzeichnet, dass** zur Einstellung des unterschiedlichen physikalischen Parameters in den Messelementen die Messelemente jeweils einer Wärmebehandlung mit unterschiedlicher Temperatur unterzogen werden, wobei die unterschiedlichen Temperaturen der Wärmebehandlung in einem vorgegebenen Temperaturbereich liegen und über den vorgegebenen Temperaturbereich gleichmässig verteilt sind.

Eine Ausgestaltung der erfindungsgemässen Vorrichtung ist **dadurch gekennzeichnet, dass** die Messelemente feste Körper mit einem Volumen von wenigen mm³ sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine beispielhafte Abhängigkeit eines physikalischen Parameters P von der Wärmebehandlungstemperatur T_{HT} der Elemente mit Temperaturgedächtnis gemäss der Erfindung;
- Fig. 2: eine beispielhafte 1-, 2- oder 3-dimensionale Anordnung von einzelnen Elementen mit Temperaturgedächtnis zur Messung der Temperatur;
- Fig. 3: die erste Messung des physikalischen Parameter P der einzelnen Elemente in der Anordnung nach Fig. 2 vor dem Einsatz zur Temperaturbestimmung;
- Fig. 4: die Werte des bei der Messung gemäss Fig. 3 ermittelten physikalischen Parameters für die einzelnen Elemente der Anordnung;
- Fig. 5: der Einsatz der Elemente-Anordnung in einer thermischen Maschine, z.B. einer Gasturbine;
- Fig. 6: die zweite Messung des physikalischen Parameter P der einzelnen Elemente in der Anordnung nach Fig. 2 nach dem Einsatz zur Temperaturbestimmung;
- Fig. 7: die Werte des bei der Messung gemäss Fig. 6 ermittelten physikalischen Parameters für die einzelnen Elemente der Anordnung; und
- Fig. 8: den Vergleich der Ergebnisse der beiden Messungen in Form einer Subtraktion der Werte-Matrizen.

### WEGE ZUR AUSFÜHRUNG DER ERFINDUNG

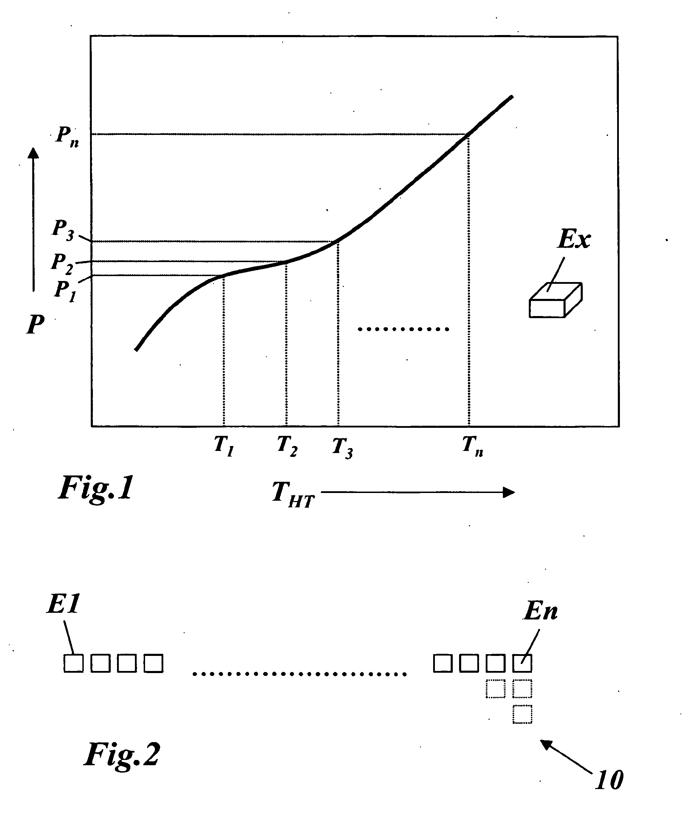

Gemäss Fig. 1 wird bei dem nachfolgend beschriebenen Ausführungsbeispiel der Erfindung ausgegangen von einem beispielsweise quaderförmigen Messelement Ex mit den Kantenlängen 2x2x1 mm, das aus einem Material besteht mit einem physikalischen Parameter P, z.B. der elektrischen Leitfähigkeit, der gemäss der in Fig. 1 dargestellten Kurve von der Temperatur T_{HT} abhängt, bei der das Messelement Ex einer länger andauernden Wärmebehandlung (Heat Treatment HT) unterzogen worden ist. Andere physikalische Parameter mechanischer, magnetischer, optischer oder thermischer Art sind selbstverständlich auch denkbar.

Der bei dieser Wärmebehandlung erreichte Wert des physikalischen Parameters P bleibt erhalten, wenn nach der Wärmebehandlung das Messelement Ex hinreichend schnell auf Normaltemperatur abgekühlt wird. Auf diese Weise können bei verschiedenen Messelementen E1,..,En durch Wahl unterschiedlicher Temperaturen T₁,..,Tₙ der Wärmebehandlung auf eindeutige und reversible Weise entsprechend unterschiedliche Werte P₁,..,Pₙ des physikalischen Parameters P erzeugt werden. Wird dann z.B. das Messelement E3, dessen physikalischer Parameter P durch eine Wärmebehandlung bei der Wärmebehandlungstemperatur T_{HT} = T₃ auf einen Wert P₃ eingestellt worden ist, anschliessend einer Wärmebehandlung bei der tieferliegenden Temperatur T₂ unterzogen, verändert sich der Wert des physikalischen Parameters P von P₃ auf P₂.

Wenn nun bei einer thermischen Maschine (Gasturbine oder dgl.) oder einem Kessel (Dampferzeuger etc.), die bei hohen Temperaturen betrieben werden, die aktuelle Betriebstemperatur an einem Teil der Vorrichtung gemessen werden soll, wird eine Vielzahl von einzelnen Messelementen E1,..,En hergestellt, die bei unterschiedlichen, abgestuften Temperaturen T₁,..,Tₙ wärmebehandelt worden sind, und entsprechend unterschiedliche Werte P₁,..,Pₙ des ausgewählten physikalischen Parameters P aufweisen. Um eine genaue Messung der Temperatur zu ermöglichen, sollten die Temperaturwerte T₁,..,Tₙ möglichst gleichmässig über den zu erwartenden Betriebstemperatur verteilt sein.

Die so vorbereiteten Messelemente E₁,..,Eₙ werden nun gemäss Fig. 2 zu einer linearen, 2-dimensionalen oder auch 3-dimensionalen Element-Anordnung 10 zusammengestellt (Fig. 2 zeigt eine lineare Anordnung der Messelemente E₁,..,Eₙ; eine 2-dimensionale Anordnung ist durch die punktiert gezeichneten zusätzlichen Elemente angedeutet). Bei der Wahl der Element-Anordnung 10 sollte sichergestellt sein, dass die darin enthaltenen einzelnen Messelemente E1,..,En am späteren Messort während der Messung möglichst alle derselben Betriebstemperatur ausgesetzt sind, um eine eindeutige Temperaturbestimmung zu ermöglichen.

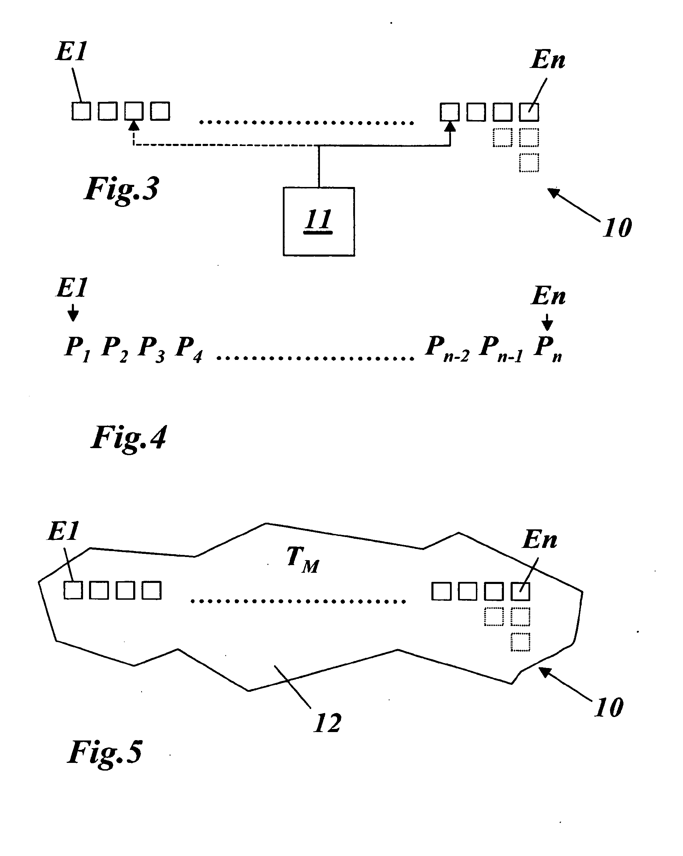

Für die Element-Anordnung 10 der Fig. 2 wird nun gemäss Fig. 3 in einer ersten Messung mittelseiner geeigneten Messvorrichtung 11 der Wert des physikalischen Parameters P für jedes der Messelemente E1,..,En bestimmt. Für eine lineare Anordnung von Messelementen E1,..,En ergibt sich dann gemäss Fig. 4 eine lineare Reihe von zugehörigen P-Werten P₁, P₂, P₃,...., Pₙ₋₂, Pₙ₋₁, Pₙ; für eine 2-dimensionale Anordnung von Messelementen Ex ergäbe sich entsprechend eine 2-dimensionale Matrix von P-Werten.

Nach der ersten Bestimmung der P-Werte kann die Element-Anordnung 10 gemäss Fig. 5 an dem zur Temperaturmessung ausgewählten Ort an einem Maschinenteil 12 oder dgl. angebracht werden, und wird dort während der Dauer der Messung einer Betriebstemperatur T_{M} ausgesetzt.

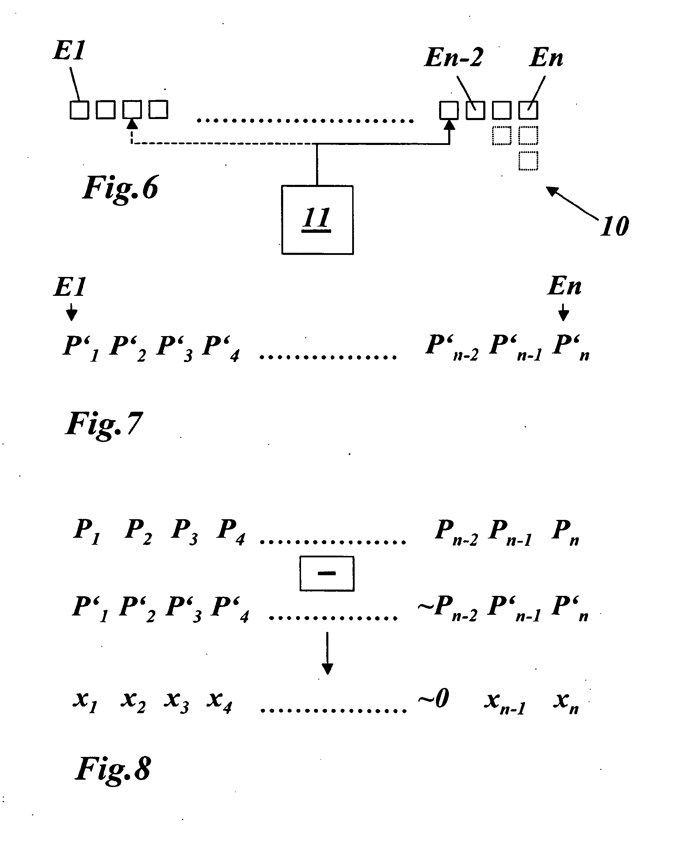

Anschliessend werden in einer zweiten Messung (Fig. 6) erneut die P-Werte der einzelnen Messelemente E1,..,En der Element-Anordnung 10 gemessen. Aus dieser Messung ergibt sich nun eine Reihe von P-Werten P'₁, P'₂, P'₃,...., P'ₙ₋₂, P'ₙ₋₁, P'ₙ, die sich in der Regel von den P-Werten P₁, P₂, P₃,...., Pₙ₋₂, Pₙ₋₁, Pₙ der ersten Messung unterscheiden. Dies gilt für die Messelemente Ex, deren Wärmebehandlungstemperatur T_{HT} sich von der Betriebstemperatur T_{M} unterscheidet. Durch den Betrieb bei der Betriebstemperatur T_{M} sind diese Messelemente praktisch einer Wärmebehandlung mit einer abweichenden Wärmebehandlungstemperatur ausgesetzt, so dass sich ihr Wert des physikalischen Parameters P verändert. Nur für diejenigen Messelemente Ex, deren Wärmebehandlungstemperatur T_{HT} gleich der Betriebstemperatur T_{M} ist, oder nur wenig von dieser abweicht, ändert sich der Wert des physikalischen Parameter P nicht oder nur wenig.

Durch einen paarweisen Vergleich der vor dem Einsatz gemessenen P-Werte P₁, P₂, P_{3,}...., Pₙ₋₂, Pₙ₋₁, Pₙ mit den nach dem Einsatz gemessenen P-Werten P'₁, P'₂, P'₃,...., P'ₙ₋₂, P'ₙ₋₁, P'ₙ kann auf einfache Weise festgestellt werden, für welche Messelemente Ex sich der P-Wert nicht oder fast nicht geändert hat. Die diesen Messelementen zugeordnete Wärmebehandlungstemperatur ist dann gleich oder ungefähr gleich der Betriebstemperatur T_{M}, die beim Einsatz am Ort der Element-Anordnung 10 geherrscht hat.

Falls die mathematische Vergleichsmethode die Subtraktion ist, kann der Vergleich dadurch formalisiert werden, dass die Reihen bzw. Matrizen der gemessenen P-Werte vor und nach dem Einsatz voneinander abgezogen werden, wie dies in Fig. 8 schematisch dargestellt ist. Für das Messelement E1 ergibt sich aus der Subtraktion P₁-P'₁ ein Differenzwert x₁, für das Messelement E2 ergibt sich aus der Subtraktion P₂-P'₂ ein Differenzwert x₂, usw.. Wenn sich beispielsweise herausstellt, dass der gemessene Wert P'ₙ₋₂ ungefähr gleich dem gemessenen Wert Pₙ₋₂ ist, ergibt die Subtraktion ungefähr den Differenzwert 0 (Fig. 8). Daraus kann dann geschlossen werden, dass die zu messende Betriebstemperatur T_{M} ungefähr gleich der Wärmebehandlungstemperatur Tₙ₋₂ des Messelements Eₙ₋₂ war.

Das Messverfahren gemäss der Erfindung kann noch einmal wie folgt zusammengefasst werden:
(1) Es werden Thermogedächtnis-Elemente hergestellt.
(2) Die Elemente werden durch eine Wärmebehandlung voreingestellt, wobei jedes Element einer anderen Wärmebehandlungstemperatur unterworfen wird.
(3) Die voreingestellten Elemente werden in einer geeigneten Anordnung (1-, 2- oder 3-dimensional) zusammengestellt.
(4) Bestimmte physikalische Eigenschaften (Parameter) der Elemente werden gemessen und abgespeichert.
(5) Die Elemente-Anordnung wird am Messort eingebaut und der dortigen Betriebstemperatur ausgesetzt.
(6) Nach Beendigung des Betriebs wird die Anordnung ausgebaut und die ausgewählten physikalischen Eigenschaften der Elemente werden erneut gemessen.
(7) Die gemessenen Werte werden paarweise verglichen, z.B. voneinander subtrahiert. Im Falle einer Subtraktion hat dasjenige Element, dessen Werte sich am wenigsten geändert haben, und das daher von der Subtraktion am stärksten betroffen ist, eine Wärmebehandlungstemperatur, die der Betriebstemperatur am nächsten kommt.

Die vorgeschlagene neue Messmethode ist eine relative und keine absolute Messung. Sie erlaubt eine präzise und kostengünstige Messung der thermischen Betriebsbedingungen in Gasturbinen und Kesseln. Abhängig vom verwendeten Werkstoff der Elemente können verschiedene Temperaturbereiche abgedeckt werden, so dass die Methode für thermische Vorrichtungen mit unterschiedlichen Betriebstemperaturen anwendbar ist.

### BEZUGSZEICHENLISTE

- 10: Element-Anordnung
- 11: Messvorrichtung
- 12: Maschinenteil
- E1,..,En: Messelement (passiv)
- P,P₁,..,Pₙ: Parameter (temperaturabhängig)
- T_{HT},T₁,..,Tₙ: Temperatur der Wärmebehandlung
- T_{M}: Betriebstemperatur (der Maschine)

## Patentansprüche

1. Verfahren zum passiven Bestimmen der Betriebstemperatur (T_{M}) in einer thermisch stark belasteten Einrichtung (12), insbesondere einer Gasturbine oder einem Kessel, **gekennzeichnet durch** folgende Schritte:
- es wird eine Mehrzahl von einzelnen passiven Messelementen (E1,..,En) bereitgestellt, die wenigstens einen messbaren physikalischen Parameter (P) aufweisen, der in eindeutiger Weise von der bei einer Wärmebehandlung des Messelements (E1,..,En) oder eines im Messelement (E1,..,En) eingesetzten Materials eingestellten konstanten Temperatur (T_{HT}) abhängt, und der für die verschiedenen Messelemente (E1,..,En) unterschiedlich eingestellt ist;
- die einzelnen Messelemente (E1,..,En) werden zu einer ein- oder mehrdimensionalen Anordnung (10) zusammengestellt, derart, dass die gesamte Anordnung (10) bei der Messung der Betriebstemperatur (T_{M}) im wesentlichen nur einer Temperatur ausgesetzt ist;
- es werden in einer ersten Messung die Werte des physikalischen Parameters (P) für alle Messelemente (E1,..,En) der Anordnung (10) bestimmt, bevor die Anordnung (10) der zu messenden Betriebstemperatur (T_{M}) ausgesetzt wird;
- die Anordnung (10) wird über einen längeren Zeitraum der zu messenden Betriebstemperatur (T_{M}) in der Einrichtung ausgesetzt;
- es werden anschliessend in einer zweiten Messung erneut die Werte des physikalischen Parameters (P) für alle Messelemente (E1,..,En) der Anordnung (10) bestimmt; und
- es werden die in der ersten und zweiten Messung gemessenen Werte des physikalischen Parameters (P) für jedes der Messelemente (E1,..,En) miteinander verglichen und als gemessene Temperatur die Temperatur der Wärmebehandlung (T_{HT}) desjenigen Messelements genommen, dessen Wert des physikalischen Parameters (P) sich bei beiden Messungen am wenigsten verändert hat.

2. Verfahren nach Anspruch 1, **dadurch gekennzeichnet, dass** im Rahmen des Vergleichs der Werte aus der ersten und zweiten Messung die gemessenen Werte des physikalischen Parameters paarweise voneinander subtrahiert werden.

3. Verfahren nach Anspruch 1 oder 2, **dadurch gekennzeichnet, dass** zur Einstellung des unterschiedlichen physikalischen Parameters (P) in den Messelemente (E1,..,En) die Messelementen (E1,...,En) jeweils einer Wärmebehandlung mit unterschiedlicher Temperatur (T_{HT}) unterzogen werden.

4. Verfahren nach Anspruch 3, **dadurch gekennzeichnet, dass** die unterschiedlichen Temperaturen (T_{HT}) der Wärmebehandlung in einem vorgegebenen Temperaturbereich liegen und über den vorgegebenen Temperaturbereich gleichmässig verteilt sind.

5. Vorrichtung zur Durchführung des Verfahrens nach Anspruch 1, **gekennzeichnet durch** eine Mehrzahl von einzelnen passiven Messelementen (E1,..,En), die wenigstens einen messbaren physikalischen Parameter (P) aufweisen, der in eindeutiger Weise von der bei einer Wärmebehandlung des Messelements (E1,..,En) oder eines im Messelement (E1,..,En) eingesetzten Materials eingestellten konstanten Temperatur (T_{HT}) abhängt, und der für die verschiedenen Messelementen (E1,..,En) unterschiedlich eingestellt ist, wobei die einzelnen Messelemente (E1,..,En) zu einer ein- oder mehrdirriensionalen Anordnung (10) zusammengestellt sind, derart, dass die gesamte Anordnung (10) bei der Messung der Betriebstemperatur (T_{M}) im wesentlichen nur einer Temperatur ausgesetzt ist.

6. Vorrichtung nach Anspruch5, **dadurch gekennzeichnet, dass** die Messelemente (E1,..,En) feste Körper mit einem Volumen von wenigen mm³ sind.

## Claims

1. Method for passive determination of the operating temperature (T_{M}) in a thermally highly loaded device (12) in particular a gas turbine or a boiler, **characterized by** the following steps:
- a plurality of individual passive measurement elements (E1,...,En) are provided, which have at least one measurable physical parameter (P) which depends unambiguously on the constant temperature (T_{HT}) which is set during heat treatment of the measurement element (E1,...,En) or of a material which is used in the measurement element (E1,...,En), and which parameter (P) is set differently for the different measurement elements (E1,...,En),
- the individual measurement elements (E1,...,En) are combined to form a one-dimensional or multi-dimensional arrangement (10) such that the entire arrangement (10) is subject to essentially only one temperature during the measurement of the operating temperature (T_{M});
- in a first measurement, the values of the physical parameter (P) are determined for all the measurement elements (E1,...,En) in the arrangement (10), before the arrangement (10) is subjected to the operating temperature (T_{M}) to be measured;
- the arrangement (10) is subjected over a relatively long time period to the operating temperature (T_{M}) to be measured in the device;
- in a second measurement, the values of the physical parameter (P) are then determined for all the measurement elements (E1,...,En) in the arrangement (10); and
- the values of the physical parameter (P) measured in the first and the second measurement for each of the measurement elements (E1,...,En) are compared with one another and the temperature of the heat treatment (T_{HT}) of that measurement element whose value of the physical parameter (P) has changed the least in the two measurements is taken as the measured temperature.

2. Method according to Claim 1, **characterized in that**, in the course of the comparison of the values from the first and the second measurement, the measured values of the physical parameter are subtracted from one another in pairs.

3. Method according to Claim 1 or 2, **characterized in that**, in order to set the different physical parameter (P) in the measurement elements (E1,...,En), the measurement elements (E1,...,En) are each subjected to a heat treatment at a different temperature (T_{HT}).

4. Method according to Claim 3, **characterized in that** the different temperatures (T_{HT}) of the heat treatment are in a predetermined temperature range and are distributed uniformly over the predetermined temperature range.

5. Apparatus for carrying out the method according to Claim 1, **characterized by** a plurality of individual passive measurement elements (E1,...,En) which have at least one measurable physical parameter (P) which depends unambiguously on the constant temperature (T_{HT}) which is set during heat treatment of the measurement element (E1,...,En) or of a material which is used in the measurement element (E1,...,En), and which parameter (P) is set differently for the different measurement elements (E1,...,En), wherein the individual measurement elements (E1,...,En) are combined to form a one-dimensional or multi-dimensional arrangement (10) such that the entire arrangement (10) is subject to essentially only one temperature during the measurement of the operating temperature (T_{M}).

6. Apparatus according to Claim 5, **characterized in that** the measurement elements (E1,...,En) are solid bodies with a volume of a few mm³.

## Revendications

1. Procédé de détermination passive de la température de fonctionnement (T_{M}) dans un dispositif (12) exposé à de fortes contraintes thermiques, notamment une turbine à gaz ou une chaudière, **caractérisé par** les étapes suivantes :
- une pluralité d'éléments de mesure passifs (E1, ..., En) est mise à disposition, lesquels présentent au moins un paramètre physique mesurable (P), lequel dépend explicitement de la température constante (T_{HT}) réglée lors d'un traitement thermique de l'élément de mesure (E1, ..., En) ou d'un matériau utilisé dans un élément de mesure (E1, ..., En), et lequel est réglé différemment pour les différents éléments de mesure (E1, ..., En) ;
- les éléments de mesure (E1, ..., En) individuels sont assemblés en un arrangement (10) uni- ou multidimensionnel de telle sorte que l'arrangement (10) global n'est exposé pour l'essentiel qu'à une seule température lors de la mesure de la température de fonctionnement (T_{M}) ;
- les valeurs du paramètre physique (P) de tous les éléments de mesure (E1, ..., En) de l'arrangement (10) sont déterminées dans une première mesure, avant que l'arrangement (10) soit exposé à la température de fonctionnement (T_{M}) à mesurer ;
- l'arrangement (10) est exposé pendant une période prolongée à la température de fonctionnement (T_{M}) dans le dispositif ;
- les valeurs du paramètre physique (P) de tous les éléments de mesure (E1, ..., En) de l'arrangement (10) sont de nouveau déterminées dans une deuxième mesure ; et
- les valeurs du paramètre physique (P) de chaque élément de mesure (E1, ..., En) mesurées lors de la première et de la deuxième mesures sont comparées entre elles et la température mesurée adoptée est la température du traitement thermique (T_{HT}) de l'élément de mesure dont la valeur du paramètre physique (P) s'est le moins modifiée lors des deux mesures.

2. Procédé selon la revendication 1, **caractérisé en ce que** dans le cadre de la comparaison des valeurs de la première et de la deuxième mesures, les valeurs mesurées du paramètre physique sont soustraites les unes des autres par paires.

3. Procédé selon la revendication 1 ou 2, **caractérisé en ce que** pour le réglage du paramètre physique (P) différent dans les éléments de mesure (E1, ..., En), les éléments de mesure (E1, ..., En) sont respectivement soumis à un traitement thermique avec une température (T_{HT}) différente.

4. Procédé selon la revendication 3, **caractérisé en ce que** les températures (T_{HT}) différentes du traitement thermique se trouvent dans une plage de températures prédéfinie et sont distribuées régulièrement sur la plage de températures prédéfinie.

5. Dispositif pour mettre en oeuvre le procédé selon la revendication 1, **caractérisé par** une pluralité d'éléments de mesure (E1, ..., En), lesquels présentent au moins un paramètre physique mesurable (P), lequel dépend explicitement de la température constante (T_{HT}) réglée lors d'un traitement thermique de l'élément de mesure (E1, ..., En) ou d'un matériau utilisé dans un élément de mesure (E1, ..., En), et lequel est réglé différemment pour les différents éléments de mesure (E1, ..., En), les éléments de mesure (E1, ..., En) individuels étant assemblés en un arrangement (10) uni- ou multidimensionnel de telle sorte que l'arrangement (10) global n'est exposé pour l'essentiel qu'à une seule température lors de la mesure de la température de fonctionnement (T_{M}).

6. Dispositif selon la revendication 5, **caractérisé en ce que** les éléments de mesure (E1, ..., En) sont des corps solides ayant un volume de quelques mm³.
